Europäisches Patentamt

European Patent Office

Office européen des brevets

(19)

(11) Veröffentlichungsnummer : **0 117 922**
**B1**

(12) **EUROPÄISCHE PATENTSCHRIFT**

(45) Veröffentlichungstag der Patentschrift :
17.07.85

(21) Anmeldenummer : 83113094.3

(22) Anmeldetag : 24.12.83

(51) Int. Cl.⁴ : **E 21 F 15/10, B 65 G 53/40,
B 65 G 53/10**

(54) Vorrichtung zum Fördern von staubförmigen bis grobkörnigen Gütern, insbesondere Dammbaustoffen im Untertagebergbau.

(30) Priorität : 03.02.83 DE 3303610

(43) Veröffentlichungstag der Anmeldung :
12.09.84 Patentblatt 84/37

(45) Bekanntmachung des Hinweises auf die Patenterteilung : 17.07.85 Patentblatt 85/29

(84) Benannte Vertragsstaaten :
AT BE CH FR GB IT LI LU NL SE

(56) Entgegenhaltungen :
EP-A- 0 008 270
CH-A-    183 838
DD-A-     31 370
DD-A-     46 795
DE-A- 3 138 657
DE-C-    554 228
DE-C-    605 683
DE-U- 8 111 370
GB-A- 1 412 693
US-A- 2 710 232

(73) Patentinhaber : Ferroplast Gesellschaft für Metall-
und Kunststofferzeugnisse mbH
Am Beul 33
D-4320 Hattingen/Ruhr (DE)

(72) Erfinder : Schlimbach, Heinrich
Am Krusen 21
D-4300 Essen 15 (DE)

(74) Vertreter : Beyer, Rudi
Gneisenaustrasse 1
D-4030 Ratingen 6 (Hösel) (DE)

Jouve, 18, rue St-Denis, 75001 Paris, France

**Beschreibung**

Die Erfindung betrifft eine Vorrichtung gemäß dem Gattungsbegriff des Patentanspruches 1.

Gegenstand der nicht vorveröffentlichten, der Anmelderin gehörenden Patentanmeldung (DE-A-3 138 657) bildet ein Verfahren zum Fördern von staub- bis grobkörnigen Gütern, vornehmlich zur Anwendung im Untertagebergbau, bei welchem das Fördergut aus wenigstens einem Behälter in eine Förderleitung gefördert wird, wobei in dem zu entleerenden Gehäuse ein Druckgaskissen erzeugt und ständig mit einem Druck erhalten wird, der größer ist als der in der Förderleitung herrschende Gegendruck und zum Wegfördern des Gutes das Druckgaskissen gegen das Fördergut bewegt wird, wobei ein Druckgas-Fördergut-Gemisch in das Förderrohr übergeführt wird, wobei das Verfahren nach der nicht vorveröffentlichten Patentanmeldung der Anmelderin dadurch gekennzeichnet ist, daß das Druckgaskissen mit solcher Geschwindigkeit gegen das in dem Gehäuse befindliche Gut bewegt wird, daß ein gleicher oder annähernd gleicher Abstand in axialer zentrischer Erstreckung des Druckgaskissens beibehalten wird, wobei das Druckgaskissen so rasch gegen das wegzufördernde Gut bewegt wird, das ein vorbestimmtes Gas-Luft-Gemisch-Verhältnis eingehalten wird. Dabei soll nach dem Verfahren der nicht vorveröffentlichten früheren Patentanmeldung das Druckgaskissen stets unter gleichem Druckgasdruck gehalten werden. Das Druckgaskissen wird über seinen Umfang kontinuierlich mit Druckgas aufgefüllt.

Außerdem betrifft die nicht vorveröffentlichte frühere Patentanmeldung eine Vorrichtung zum Fördern von staubförmigen bis grobkörnigen Gütern, insbesondere von Dammbaustoffen im Untertagebergbau, mit mindestens einem Speicherbehälter für das Fördergut, aus dem das Fördergut, z. B. durch sein Gewicht, mindestens einer unterhalb des Speicherbehälters befindlichen Fördervorrichtung zuführbar ist, die ein rohrförmiges Gehäuse oder mehrere rohrförmige Gehäuse aufweist, das bzw. die mit dem Speicherbehälter durch wenigstens eine verschließbare Öffnung verbunden ist bzw. sind, wobei an das betreffende Gehäuse eine Förderleitung oder mehrere angeschlossen ist bzw. sind, in die das Fördergut aus dem Gehäuse hineinförderbar ist, wobei die Vorrichtung dadurch gekennzeichnet sein soll, daß

a) in dem liegend angeordneten Gehäuse wenigstens ein in Längsrichtung des Gehäuses bewegliches Kupplungsglied angeordnet ist ;

b) an dem Kupplungsglied mindestens ein Trennelement angeordnet ist ;

c) das Trennelement über seinen Umfang wenigstens eine, vorzugsweise mehrere Durchströmöffnungen aufweist ;

d) die Durchströmöffnungen einerseits an einen Druckgaszuführraum und anderenends an einen Förderraum angeschlossen sind, der zwischen der Vorderseite des Trennelementes und dem zu fördernden Gut gebildet ist ;

e) an den Druckgaszuführraum eine Druckgaszuführleitung angeschlossen ist ;

f) in dem Förderraum ein Druckgaskissen variabler Größe angeordnet ist, das durch die Durchströmöffnungen vom Druckgaszuführraum aus mit Druckgas speisbar ist ;

g) das Trennelement eine Förderöffnung oder mehrere solcher Öffnungen besitzt ;

h) an die Förderöffnung o. dgl. eine Förderleitung angeschlossen ist, in die das Fördergut-Druckgas-Gemisch einströmt.

Bei Anwendung des Verfahrens nach der nicht vorveröffentlichten Patentanmeldung der Anmelderin lassen sich praktisch beliebig lange und/oder auch in ihren Querschnittsabmessungen innerhalb der räumlichen Gegebenheiten auch beliebig große Gehäuse von schütt-, streu-, riesel- oder auch quasifließfähigen Gütern, z. B. Baustoffen, Baustoffmischungen, Granulaten, Sand, Kies, Zement und Zementmischungen, Mörtelmischungen, hygroskopischen oder stark hygroskopischen Stoffen wie sie z. B. zum Dämmesetzen Untertage zur Anwendung gelangen, Arzneien, Getreide o. dgl., restlos und mit großer Förderleistung entleeren.

Das bei dem Verfahren nach der nicht vorveröffentlichten Patentanmeldung der Anmelderin erzeugte, entsprechend der Entleerung des betreffenden Gehäuses, also entsprechend dem Wegfördern des Gutes wandernde Druckgaskissen sorgt dafür, daß sich keine Brücken, Ansätze oder Verkrustungen bilden können. Vielmehr werden die auch in den Eckbereichen befindlichen Güter von dem Druckgaskissen erfaßt, mit Druckgas gemischt und in die Förderleitung weggefördert. Es ist somit nicht möglich, daß sich z. B. die Druckluft den Weg des geringsten Widerstandes sucht und z. B. nur im mittleren Bereich oder in unkontrollierbaren Querschnittsbereichen Strömungskanäle bilden, wo das Gut weggefördert wird, während in allen übrigen Querschnittsbereichen Gut, insbesondere zu Verkrustungen bzw. zum Anbacken neigendes Gut, liegenbleiben könnte. Das Druckgaskissen erstreckt sich über den gesamten lichten Querschnittsbereich des betreffenden Gehäuses, so daß dieses vollkommen leergefördert wird.

Beim Leerfördern eines Gehäuses entstehen insbesondere in den Randbereichen durch Ejektorwirkung starke Verwirbelungen, die in Richtung auf die Mündungsöffnung der Förderleitung verlaufen, so daß besonders in zu Verkrustungen neigenden, also in gefährdeten Bereichen mit Sicherheit das Gut weggefördert wird.

Dabei hat man es in der Hand, durch die Geschwindigkeit, mit der das Druckgaskissen gegen das zu fördernde Gut wandert und/oder durch den im Druckgaskissen herrschenden Druck und/oder durch den Volumenstrom des Gases das Verhältnis von wegzuförderndem Gut zu Druckgas, also zum Trägermedium, weitgehend feinfühlig anzustellen, und zwar ohne daß irgendwelche Umbauten an der jeweils eingesetzten Vorrichtung vorzunehmen wären.

Das Verfahren nach der nicht vorveröffentlichten Patentanmeldung der Anmelderin arbeitet auch sehr wirtschaftlich, da mit verhältnismäßig geringen Druckgasmengen, insbesondere Druckluftmengen, sich große Gutmengen fördern lassen, so daß die Förderleistung auch über lange Strecken entsprechend hoch sind, was z. B. zum Einsatz im untertägiger Bergbaubetrieb, z. B. beim Dämmesetzen, Hinterfüllen und Anspritzen von Ausbauen von nicht zu unterschätzender Bedeutung ist.

Ein besonderer Vorteil besteht auch darin, daß die zu entleerenden Gehäuse praktisch beliebig lang sein können. Die kommt den im untertägigen Bergbau vorliegenden Gegebenheiten besonders dadurch entgegen, weil Untertage in der Regel wenig Bauhöhe zur Verfügung steht, so daß bei Anwendung des Verfahrens nach der nicht vorveröffentlichten Patentanmeldung der Anmelderin langgestreckte, rohrförmige Behälter, die gewissermaßen auf dem Liegenden angeordnet sind, eingesetzt werden können, die durch das wandernde Druckgaskissen restlos, und zwar auch von hygroskopischen Baustoffen wie sie beim Dämmesetzen Verwendung finden, entleert werden können.

Das wandernde Druckgaskissen ermöglicht es außerdem, den Verschleiß gering zu halten, da beim Entleeren eines Gehäuses praktisch keine schabenden Gegenstände eingesetzt zu werden brauchen. Vielmehr sorgen die im Druckgaskissen vorhandenen, steuerbaren und gezielt wirkenden Randzonen des Druckgaskissens für eine etwaige Ablösung des wegzufördernden Gutes sowie zu einer intensiven Fluidisierung, also Auflösung und Vermischung des Gutes mit dem Druckgas und zu einer kontinuierlichen Wegförderung in die Förderleitung, wobei weitgehend sichergestellt werden kann, daß nicht nur die Kontinuität des Förderflusses eingehalten wird, sondern auch das Verhältnis Druckgas zu Fördergut über die Zeiteinheit gesehen, eingehalten werden kann.

Außerdem läßt sich bei Anwendung des Verfahrens eine gleiche oder weitgehend gleichmäßige Beladung des Trägergasstromes in der Förderleitung erreichen. Dabei ist es möglich, je nach dem zu fördernden Gut gewisse axiale Erstreckungen des Druckgaskissens einzustellen, wodurch sich für den jeweiligen Anwendungsfall optimale Verhältnisse erzielen lassen, besonders wenn es sich um die Entleerung lang bauender, liegend angeordneter Behälter unter den beengten Raumverhältnissen im Untertagebergbau handelt.

Besonders Untertage steht praktisch überall Druckluft zur Verfügung. Sofern in den Anmeldungsunterlagen von « Druckgas » oder « Druckgaskissen » die Rede ist, so wird darunter bevorzugt Druckluft verstanden. Es steht dem jedoch nichts im Wege, im Bedarfsfalle auch andere Druckgase, z. B. Inertgase, zu verwenden, wenn dies im Hinblick auf die zu fördernden Güter notwendig oder zweckmäßig erscheint, z. B. in der Lebensmittelindustrie, zum Fördern von Getreide, Arzneimitteln oder Arzneimittelmischungen oder chemischen Stoffen. Die Ausbildung des Druckgaskissens kann z. B. Untertage, aber auch in anderen Betriebsbereichen, dadurch erreicht werden, daß in die Zuführleitung die an die Druckgasquelle angeschlossen ist, die je nach Ausbildung des Druckgaskissens sich mehr oder weniger weit öffnet, um gleiche oder annähernd gleiche Verhältnisse im Druckgaskissen aufrechtzuerhalten.

Dadurch, daß das Druckgaskissen gewissermaßen über seinen Umfang mit Druckgas aufgefüllt, d. h. gespeist, wird, kann an der Peripherie des Druckgaskissens eine Art Ejektorwirkung erzeugt werden, durch die auch stark klebendes oder hygroskopisches Gut von den Wandungen des Gehäuses entfernt, verwirbelt und in die Förderleitung getragen wird. Es wird auch dadurch mit Sicherheit ausgeschlossen, daß sich das Druckgas nur axial oder in anderen Bereichen den Weg des geringstens Widerstandes sucht und das wegzufördernde Gut durch Brückenbildung o. dgl. in Eckbereichen oder sonstigen Querschnittsbereichen zum Teil liegen bleibt.

Eine Vorrichtung nach der nicht vorveröffentlichten Patentanmeldung der Anmelderin ist extrem einfach aufgebaut, besitzt kaum bewegliche Teile. Als charakteristisches Merkmal ist besonders hervorzuheben, daß der Verschleiß bei einer Vorrichtung nach der nicht vorveröffentlichten Patentanmeldung der Anmelderin gering gehalten werden kann, da Gutteile nicht durch kratzend oder schabend wirkende Elemente abgelöst und weggefördert werden, sondern durch ein Druckgaskissen, und zwar vornehmlich durch die Ejektorwirkung im peripheren Bereich des Trennelementes. Das Trennelement selbst dient somit nicht zum Abkratzen, Auflösen oder Wegschieben des zu fördernden Gutes, und zwar auch nicht das Kupplungsglied. Durch die Durchströmöffnungen wird das dem zu fördernden Gut gegenüberliegende Trennelement vom Druckgas, insbesondere Druckluft, peripher umspült, wobei sich starke Randwirbel bilden, die durch Ejektorwirkung das Gut auch aus weit entfernt liegenden Ecken ablösen, fluidisieren, d. h. auflockern und zur Mündungsöffnung der Förderleitung wegtransportieren.

Die Erfindung betrifft eine Verbesserung oder weitere Ausgestaltung des Gegenstandes nach der nicht vorveröffentlichten Patentanmeldung der Anmelderin. Und zwar soll insbesondere eine noch gleichmäßigere Umströmung des Trennelementes über dessen Umfang und dadurch ein noch besserer Aufbau des Druckgaskissens erreicht sowie ein ungünstiger peripherer Druckabfall im Bereich von Einmündungsöffnungen von Zuführstutzen für das Fördergut vermieden werden.

Ausgehend von einer Vorrichtung gemäß dem Gattungsbegriff des Patentanspruches 1 wird diese Aufgabe durch die kennzeichnenden Merkmale des Patentanspruches 1 gelöst.

Dadurch, daß die axiale Erstreckung des umfangsseitigen Überströmschlitzes etwa gleich oder größer als die Einmündungsöffnung des jeweiligen Stutzens zum Zuführen von Fördergut ist, ergibt sich ein relativ langer axialer Überströmschlitz, der umfangsseitig des Trennelementes überall gleiche radiale Erstreckung aufweist. Die Folge davon ist ein über den Umfang des Trennelementes gleichmäßiger Aufbau des Druckgaskissens und dessen gleichmäßige Speisung mit Druckgas. Gelangt das Trennelement im Bereich der Einmündungsöffnung eines Stutzens zum Zuführen von Fördergut, so wird durch die große axiale Erstreckung des umfangseitigen Überströmschlitzes erreicht, daß es nicht mehr zu einem unerwünschten, oft einseitigen Druckabfall über den Umfangsbereich des Trennelementes gesehen, kommt. Befindet sich z. B. das Trennelement unmittelbar unter der Einmündungsöffnung eines solchen Stutzens, so deckt der in seiner axialen Erstreckung genauso große oder sogar längere Überströmschlitz diese Einmündungsöffnung ab, so daß an der Ausmündungsstelle des Überströmschlitzes in das Druckgaskissen sich wiederum gleiche Strömungsverhältnisse und damit ein gleichmäßiges Auffüllen des Druckgaskissens ergibt.

Die Folge davon ist eine stetige, nicht pulsierende Förderung am Austragsende des Förderrohres.

Der lange Überströmschlitz und die damit einhergehende, verhältnismäßig lange axiale Erstreckung der Umfangswandungen des Trennelementes ermöglichen es außerdem, Drehschieber oder andere verhältnismäßig großflächige, aber unproblematisch in Offen- und Schließstellung bringbare Absperrelemente zu verwenden. Insbesondere ist es möglich, in Richtung auf das Trennelement zu öffnende Absperrkörper, insbesondere kegelförmige Absperrkörper, zu vermeiden, die mehr oder weniger weit, auch in ihrer geschlossenen Stellung durch Ablagerungen von Fördergut in Richtung auf das Trennelement hervorragen könnten, wodurch es bei der axialen Verstellbewegung des Trennelementes zu einem Anstoßen an solche Absperrkörper kommen könnte. Auch diese Schwierigkeiten sind bei der Erfindung restlos beseitigt.

Im übrigen können aber sämtliche oben im Zusammenhang mit dem Gegenstand der nicht vorveröffentlichten Patentanmeldung der Anmelderin beschriebenen Vorteile auch bei der erfindungsgemäßen Vorrichtung voll beibehalten werden. Demgemäß eignet sich eine solche Vorrichtung besonders zum Einsatz im Untertagebergbau, beispielsweise zum Anspritzen und/oder Dämmesetzen.

In Patentanspruch 2 ist eine bevorzugte Ausführungsform der Erfindung beschrieben. Dadurch wird gewährleistet, daß die Umströmungsgeschwindigkeit über die Peripherie des Trennelementes gesehen, gleich ist, so daß die Auffüllung des wandernden Druckgaskissens auf der der Fördergutseite zugekehrten Stirnfläche des Trennelementes randseitig ebenfalls gleichmäßig erfolgt.

Bei der Ausführungsform gemäß Patentanspruch 3 wird gewährleistet, daß sich die Kolbenstange nicht durchbiegen kann, so daß das Trennelement nicht an der Innenwandung des Behälters anzuecken vermag. Außerdem ergibt sich hierdurch eine kompakt bauende Ausführungsform, bei welcher die Kolbenstange Teil des Förderrohres ist.

In Patentanspruch 4 ist eine bevorzugte Ausführungsform mit guter Krafteinleitung beschrieben.

In der Zeichnung ist die Erfindung — teils schematisch — an einem Ausführungsbeispiel veranschaulicht. Es zeigen :

Figur 1   eine Vorrichtung gemäß der Erfindung im Teil-Längsschnitt bei geöffneten Drehschiebern und

Figur 2   einen Schnitt entsprechend Fig. 1, bei geschlossenen Drehschiebern mit gegenüber Fig. 1 unterschiedlicher Stellung des Trennelements.

In der Zeichnung ist die Erfindung in Anwendung auf eine Vorrichtung veranschaulicht, die z. B. im Untertagebergbau als Blasmaschine zur Anwendung gelangen kann. Eine solche Vorrichtung eignet sich zum Dämmesetzen, Hinterfüllen und Anspritzen von kleinen bis größten Leistungen. Die Vorrichtung kann problemlos, z. B. entsprechend dem Arbeitsfortschritt, vorgerückt oder an einer Einschienenhängebahn aufgehängt und verfahren werden, was aber im einzelnen nicht veranschaulicht ist.

Grundsätzlich kann die Vorrichtung z. B. auf Kufen angeordnet sein, was gleichfalls nicht dargestellt wurde.

Ein weiterer Vorteil einer solcher Vorrichtung ist neben den beschriebenen Vorteilen noch darin zu sehen, daß die Bauhöhe der gesamten Vorrichtung sehr gering ist. Zwar können auch bei einer erfindungsgemäßen Vorrichtung die Fördervorrichtung oder die Fördervorrichtungen unterhalb des Speicherbehälters für das zu fördernde Gut, z. B. Dammbaustoff, und/oder unterhalb mehrerer Speicherbehälter angeordnet sein, jedoch kann die Druckluftzufuhr durch flexible Schlauchleitungen erfolgen. Auf keinen Fall wird hierbei soviel Raum für Schrägförderer, Silos, Zellenräder und Druckkessel benötigt, wie sie zum Stande der Technik zählen. Das bedeutet, daß nicht mehr — wie bei den vorbekannten Blasmaschinen — Antriebseinheiten unterhalb einer Fördervorrichtung angeordnet und das Blasgut durch Schrägförderer aufwärts transportiert zu werden braucht. Insbesondere können der Antriebsmotor, das Getriebe und die Kupplung, die bisher für den Antrieb der Förderschnecke notwendig waren, ebenfalls entfallen und damit auch die für diese Vorrichtungsteile benötigten Räume. Infolgedessen können die Speicherbehälter 1, 2 und 3 tiefer in Bezug auf das Liegende (nicht dargestellt) angeordnet werden, was bei den beengten Raumverhältnissen Untertage von großem Vorteil ist.

Wird eine solche Vorrichtung z. B. auf oder in einem schlittenartigen Gestell gelagert, so kann sie entsprechend dem Abbaufortschritt vorgerückt werden. Es ist aber auch möglich, die Vorrichtung insgesamt an eine Einschienenhängebahn aufzuhängen und sie entsprechend dem Arbeitsfortschritt weiter zu transportieren. Dies ist deshalb möglich, weil die Bauhöhe selbst bei großen Leistungen im Vergleich zu Bauarten nach dem Stande der Technik verhältnismäßig gering gehalten werden kann, so daß die Vorrichtung insgesamt anhebbar ist. Dadurch kann der Abstand zwischen Vorrichtung und Arbeitsort stets optimal gehalten werden.

Von besonderem Vorteil ist es auch, daß eine erfindungsgemäße Vorrichtung gewissermaßen baukastenmäßig in ihren Leistungen vergrößert werden kann. Dies ist deshalb ohne weiteres zu erzielen, weil die Anzahl der Gehäuse 1, 2 und 3 u. dgl. den jeweils gewünschten Förderleistungen entsprechend in vernünftigen Grenzen praktisch beliebig vergrößert oder verkleinert werden kann. Sehr vorteilhaft ist es auch, daß im Bedarfsfalle die bisherige Druckkammer-Blasmaschine oder Fördermaschinen ganz entfallen können, da z. B. der Baustofftransport durch Druckluft erfolgt, und zwar von den Speicherbehältern 1, 2 und 3 bis zum nicht dargestellten Einsatzort.

In den Speicherbehältern 1, 2 und 3 ist das Blasgut, z. B. Baustoff für das Setzen von Dämmen im untertägigen Steinkohlebergbau, aber auch Granulate, Mörtel- oder Baustoffmischungen, Arzneien, Getreide, hygroskopische Güter, Sand, Kies o. dgl., angeordnet. Die Wandungen 4 der Behälter 1, 2 und 3 sind unter dem Boschungswinkel des Gutes oder steiler geneigt angeordnet, so daß das Gut unter seinem Gewicht von selbst nach unten in ein rohrförmiges Gehäuse 5 hineinrutscht, das bei der dargestellten Ausführungsform innen und außen einen kreisrunden Querschnitt aufweist und aus vier Rohrschüssen 6, 7, 8 und 9 besteht. Die Rohrschüsse 6 und 7 sowie 7 und 8 und 8 und 9 sind über Flansche und Schrauben (letztere nicht dargestellt) lösbar koaxial miteinander verbunden. Das Fördergut wird von den Speicherbehältern 1, 2 und 3 über Stutzen 10, 11 und 12, die mit dem Speicherbehälter 1 bzw. dem betreffenden Rohrschuß 7, 8 oder 9 verbunden ist, über Einmündungsöffnungen 13, 14 bzw. 15 dem Innenraum des rohrförmigen Gehäuses 5 zugeführt. Das Fördergut ist in der Zeichnung schematisch angedeutet.

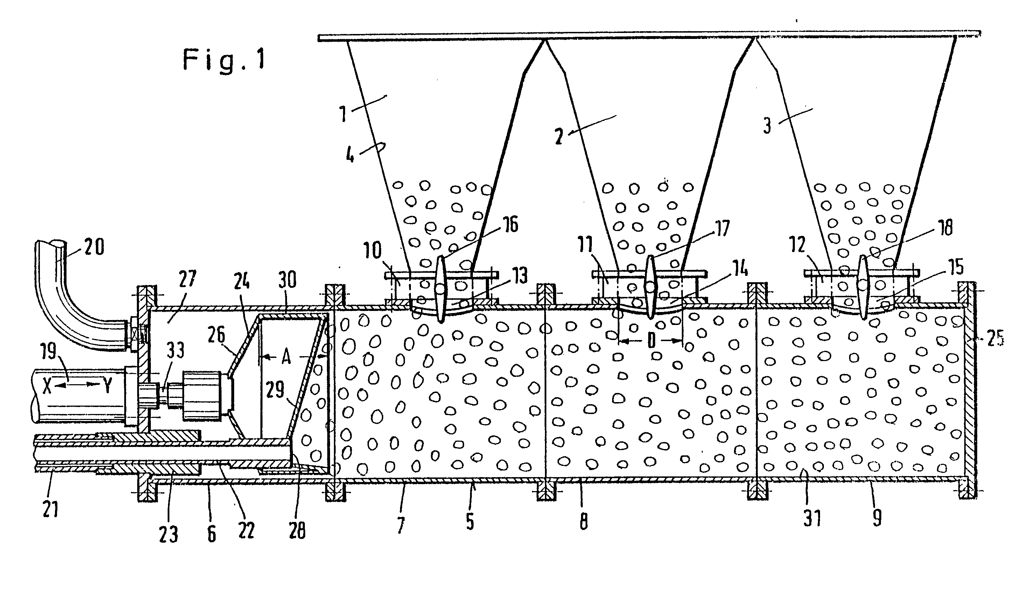

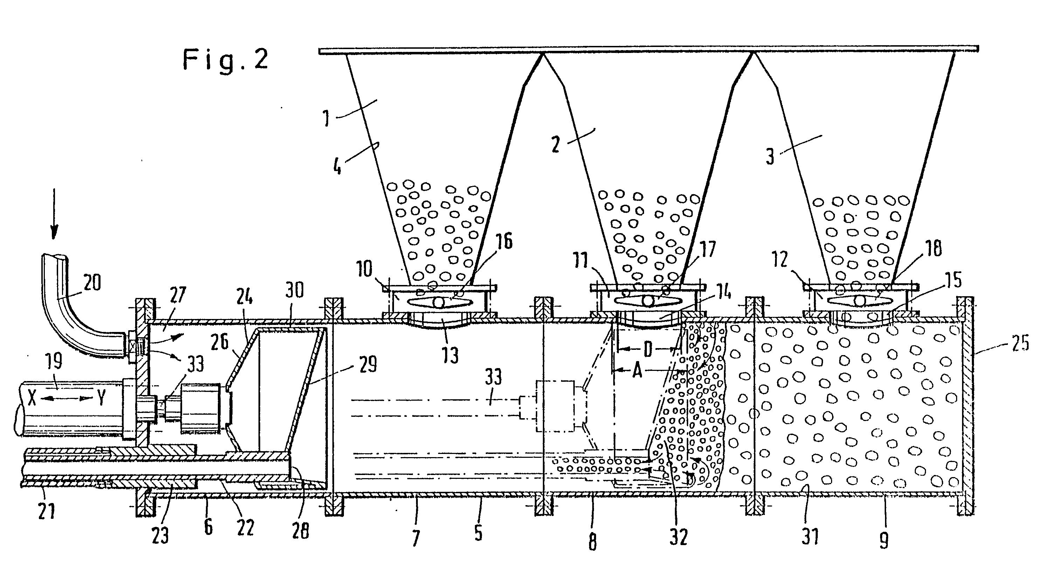

Den Stutzen 10, 11 und 12 sind Verschlußelemente 16, 17 bzw. 18 zugeordnet, die vorliegend als Drehschieber ausgebildet sind, also um horizontale Achsen — ggf. motorisch — in Auf- und Zustellung oder in Zwischenstellungen bewegbar sind. In der aus Fig. 1 ersichtlichen Stellung der Verschlußelemente 16 bis 18 befinden sich diese in ihrer vollkommen geöffneten Stellung, während sie in Fig. 2 in Schließstellung veranschaulicht sind.

In Fig. 1 ist das rohrförmige Gehäuse 5 mit Fördergut gefüllt, während es in Fig. 2 bereits teilweise entleert worden ist.

Zentrisch an dem rohrförmigen Gehäuse 5 ist ein Rohr 19 angeflanscht, in dem ein kolbenstangenförmiges Kupplungsglied 33 längsverschieblich und dichtend geführt ist. Die Bewegungsrichtungen sind in den Figuren 1 und 2 mit X bzw. Y bezeichnet.

Wie insbesondere die Fig. 1 erkennen läßt, erstreckt sich das rohrförmige Gehäuse 5 in horizontaler Ebene unterhalb der Speicherbehälter 1, 2 und 3, wodurch die gesamte Bauhöhe besonders gering gehalten werden kann.

Mit dem Bezugszeichen 20 ist eine Druckgaszuführleitung bezeichnet, die z. B. mit einer Druckluftquelle (nicht dargestellt) verbunden ist. Die Druckgaszuführleitung 20 ist an der gleichen Seite wie das Rohr 19 an der dort vorgesehenen Stirnplatte des rohrförmigen Gehäuses 5 befestigt und mündet in dessen Innern aus.

Bei der aus der Zeichnung ersichtlichen Ausführungsform ist unterhalb der Druckgaszuführleitung 20 eine Förderleitung 21 über eine in der stirnseitigen Wandung des Gehäuses 5 druckmitteldicht angeordnete Muffe lösbar angeordnet.

In die Mündungsöffnung der Förderleitung 21 ragt ein Rohrabschnitt 22 teleskopförmig und in Richtung X bzw. Y längsverschieblich hinein. Dieser Rohrabschnitt 22 ist im Bereich der Muffe 23 gelagert und ragt mit seinem nicht vollständig ersichtlichen freien Ende in die Förderleitung 21 hinein. Anderenends ist der Rohrabschnitt 22, der somit Teil der Förderleitung 21 bildet, mit einem kastenförmig ausgestalteten Trennelement 24 fest verbunden. Hier mündet der Rohrabschnitt 22 in einen hohlkastenförmigen Teil des Trennelementes 24, also in die den zwischen Trennelement 24 und der Stirnseite 25 des Gehäuses 5 befindlichen Raum aus, während in den durch die Rückseite 26 des Trennelements 24 und das Gehäuse 5 gebildeten Raum 27 über die Druckgaszuführleitung 20 Druckgas einströmt.

Wie die Zeichnung erkennen läßt, ist die Mündungsöffnung 28 des Rohrabschnittes 22 der Förderleitung 21 im unteren Bereich des Trennelementes 24 angeschlossen.

Außerdem läßt die Zeichnung erkennen, daß die Rückseite 26 des Trennelementes 24 erhaben ausgebildet ist. Die vordere Begrenzung 29 des Trennelementes 24 verläuft etwa parallel, aber mit Abstand zur Rückseite 26. Im übrigen ist das Trennelement 24 bei der dargestellten Ausführungsform an seiner Peripherie kreisrund, also entsprechend der inneren Kontur des Gehäuses 5 ausgebildet. Die Schräge der Rückseite 26 und der Begrenzung 29 kann entsprechend dem Schüttwinkel des zu fördernden Gutes gestaltet sein.

Das Trennelement 24 ist somit wie ein Hohlkasten, also etwa trichterförmig in Richtung auf das zu fördernde Gut, ausgebildet.

Im übrigen läßt die Zeichnung erkennen, daß das Trennelement 24 an seiner Peripherie mit allseitigem Spaltabstand 30 zur Innenwandung 31 des Gehäuses 5 angeordnet ist. Der Spalt oder Schlitz 30 ist umlaufend ausgebildet und über die gesamte axiale Länge des Trennelementes 24 in Bezug auf die Innenwandung 31 des Gehäuses 5 gleichgroß.

Der an die Druckgaszuführleitung 20 angeschlossene Raum 27 steht somit über den Ringschlitz 30 mit dem Raum vor dem Trennelement 24 in druckgasleitender Verbindung. Der Raum 32 vor dem Trennelement 24 wird nachfolgend als Druckgaskissen bezeichnet, da sich im Betrieb unmittelbar vor dem Trennelement 24 ein Druckgaskissen aufbaut, dessen axiale Erstreckung in Richtung X bzw. Y vom Volumenstrom des Druckgases und/oder vom Förderdruck und/oder von der Fördergeschwindigkeit des Druckgases und von der Vorwärtsbewegung des Trennelementes 24 gegen das zu fördernde Gut, also in Richtung Y, abhängt.

Die Überströmung des Druckgases aus dem Raum 27 zum Druckgaskissen 32 ist deutlich aus der Zeichnung erkennbar. Der Antrieb des Trennelementes 24 kann durch Druckmittelbeaufschlagung eines mit der Kolbenstange verbundenen, aus der Zeichnung nicht erkennbaren Kolbens geschehen, der — was in der Zeichnung ebenfalls nicht erkennbar ist — in dem Rohr 19 längsverschieblich und dichtend geführt ist. Das Rohr 19 kann bei dieser Ausführungsform als Hydraulikzylinder oder Pneumatikzylinder ausgebildet sein, so daß durch abwechselnde Druckbeaufschlagung des Hydraulikzylinders 19 das Trennelement 24 in Richtung X oder in Richtung Y bewegt werden kann.

Wie die Zeichnung weiterhin erkennen läßt, ist die axiale Länge A des Schlitzes 30 größer als der Durchmesser D der Einmündungsöffnung 13, 14 oder 15.

Die Wirkungsweise der aus der Zeichnung ersichtlichen Ausführungsform ist folgende :

Angenommen, das Trennelement 24 befinde sich in der aus Fig. 1 ersichtlichen hinteren Stellung. Zwecks Füllung des Gehäuses 5 mit Fördergut werden die Verschlußelemente 16, 17 und 18 in Offenstellung gesteuert, so daß das Fördergut aus den Speicherbehältern 1, 2 und 3 in das Gehäuse 5 hineinfällt. Nach dem Füllen des Gehäuses 5 werden die Verschlußelemente 16, 17 und 18 wieder in ihre aus Fig. 2 ersichtliche geschlossene Stellung zurückbewegt, was ebenso wie das Offensteuern motorisch erfolgen kann. Wie man erkennt, ergibt sich ein sehr guter Füllungsgrad des Gehäuses 5, da dieses praktisch vollständig bis oben gefüllt werden kann, weil unterhalb der Einmündungsöffnungen kein Raum für das Hineinbewegen von Verschlußkegeln zur Verfügung zu stehen braucht. Nach dem Verschließen der Einmündungsöffnungen 13, 14 und 15 wird die Druckgaszufuhr über die Leitung 20 eingeschaltet, woraufhin Druckgas in den Raum 27 hineinströmt, und zwar mit einem vorbestimmten Druck und/oder mit einem vorbestimmten Volumen pro Zeiteinheit. Das in den Raum 27 eingetretene Druckgas umströmt das Trennelement 24 durch den Schlitz 30 und bildet vor dem Trennelement 24 das Druckgaskissen 32 aus. Durch die hohe, düsenförmige Beschleunigung, die das Druckgas in dem Spalt 30 erfährt, wird das vor dem Trennelement 24 befindliche Gut nicht nur aufgelockert, sondern auch stark verwirbelt und zur Mündungsöffnung 28 und von dort weiter in die Leitung 22 gefördert.

Alsdann wird durch entsprechende Druckmittelbeaufschlagung des Rohres 19 die Kolbenstange 33 ausgefahren und dadurch das Trennelement 24 in Richtung Y mit vorbestimmbarer bzw. geregelter Geschwindigkeit bewegt, derart, daß eine möglichst gleichbleibende axiale Erstreckung (Erstreckung in Richtung X bzw. Y) des Druckgaskissens 32 eingehalten wird. Bei optimaler Einstellung des Druckgaskissens 32 bzw. der axialen Vorschubgeschwindigkeit für das Trennelement 24 erfolgt eine über den Querschnitt gesehene restlose Entleerung des Gehäuses 5. Der Antrieb für die Kolbenstange 33 wird so lange eingeschaltet gelassen, bis das Trennelement 24 die Stirnseite 25 des Gehäuses 5 erreicht oder annähernd erreicht hat, da ein unmittelbares Anliegen des Trennelementes 24 wegen des Druckgaskissens 32 nicht erforderlich ist. In dieser Stellung ist das Gehäuse 5 nicht nur über seine gesamte Länge, sondern auch über seinen gesamten Innenquerschnitt überall vollständig entleert, wobei wegen der intensiven Durchwirbelung und Durchmischung pro Kubikmeter Trägergas, insbesondere pro Kubikmeter Druckluft, erforderlichenfalls eine sehr hohe Beladung und damit ein entsprechend guter Wirkungsgrad erreicht werden kann, was sich für die Wirtschaftlichkeitsrechnung günstig auswirkt.

Selbstverständlich ist es nicht unbedingt notwendig, das Trennelement 24 als Hohlkasten auszubilden. In manchen Fällen kann es auch ausreichend sein, hier eine Platte oder Scheibe anzuordnen, die z. B. entsprechend dem Böschungswinkel geneigt verlaufend angeordnet sein kann.

An der Unterseite des kastenförmigen Trennelementes 24 kann mindestens eine Abweisernase o. dgl. angeordnet sein, die sich an der Innenseite des Gehäuses führt, um eine Durchbiegung des Rohrabschnittes 22 bzw. der Kolbenstange 33 auszuschließen.

Dadurch, daß die Spaltlänge 33 das Maß A aufweist, was gleich oder größer als der Durchmesser D der Einmündungsöffnung 13, 14 und 15 ist, wird erreicht, daß sich der Druck über den Umfang des Trennelementes 24 überall gleichgut aufbaut, und zwar auch in Bereichen der Einmündungsöffnungen 13, 14, 15, und zwar selbst dann, wenn das Trennelement unmittelbar zentrisch vor einer Einmündungsöffnung 13, 14 oder 15 zu liegen kommt, wie dies mit strichpunktierten Linien in Fig. 2 veranschaulicht ist. Auch in diesem Fall kommt es zu keinem ungünstigen peripheren Druckabfall, sondern zu gleichförmigen Strömungen über den Umfang des Trennelementes 24 und damit zu einer pulsationsfreien Förderung.

Bezugszeichenliste

1 Speicherbehälter
2 Speicherbehälter
3 Speicherbehälter
4 Wandung
5 Gehäuse

6 Rohrschuß

7 Rohrschuß

8 Rohrschuß

9 Rohrschuß

10 Stutzen

11 Stutzen

12 Stutzen

13 Einmündungsöffnung

14 Einmündungsöffnung

15 Einmündungsöffnung

16 Verschlußelement, Drehschieber

17 Verschlußelement, Drehschieber

18 Verschlußelement, Drehschieber

19 Rohr

20 Druckgaszufuhrleitung

21 Förderleitung

22 Rohrabschnitt

23 Muffe

24 Trennelement

25 Stirnseite

26 Rückseite

27 Raum, Druckgaszuführraum

28 Mündungsöffnung

29 Begrenzung

30 Spaltabstand, Spalt, Schlitz, Ringschlitz, Überströmschlitz

31 Innenwandung

32 Druckgaskissen

33 Kupplungsglied

A Axiale Länge des Spaltes

D Durchmesser

X Bewegungsrichtung

Y Bewegungsrichtung


**Patentansprüche**

1. Vorrichtung zum Fördern von staubförmigen bis grobkörnigen Gütern, insbesondere Dammbaustoffen im Untertagebergbau, mit mindestens einem Speicherbehälter für das Fördergut, aus dem das Fördergut z. B. durch sein Gewicht mindestens einem unterhalb des Speicherbehälters befindlichen rohrförmigen Gehäuse oder mehreren rohrförmigen Gehäusen zuführbar ist, das bzw. die mit dem Speicherbehälter oder den Speicherbehältern durch verschließbare Öffnungen verbunden ist bzw. sind, wobei an dem betreffenden Gehäuse eine Förderleitung oder mehrere Förderleitungen angeschlossen ist bzw. sind, in die das Fördergut aus dem Gehäuse hineinförderbar ist, mit einem in Längsrichtung des betreffenden Gehäuses beweglichen Kupplungsglied und einem daran angeordneten Trennelement, das über seinen Umfang einen vorzugsweise gleichgroßen radialen Schlitz zur Innenwandung des Gehäuses aufweist, wobei der Schlitz auf der einen Seite an einen Druckgaszuführraum und an der anderen Seite an den in Förderrichtung vor dem Trennelement befindlichen Förderraum angeschlossen ist, an den mindestens eine Förderleitung angeschlossen ist, in die das Fördergut-Druckgas-Gemisch einströmt, dadurch gekennzeichnet, daß die axiale Länge (A) des umfangsseitigen Überströmschlitzes (30) etwa gleich oder größer als die Einmündungsöffnung (D) des jeweiligen Stutzens zum Zuführen von Fördergut in das Gehäuse (5) ist.

2. Vorrichtung nach Anspruch 1, dadurch gekennzeichnet, daß die radiale Spalthöhe über den Umfang des kreisförmigen Trennelementes (24) gleich ist.

3. Vorrichtung nach Anspruch 1 oder 2, dadurch gekennzeichnet, daß das Trennelement (24) über mindestens eine Führungsnase an seiner Unterseite auf der Innenwandung (31) des Gehäuses (5) geführt ist.

4. Vorrichtung nach Anspruch 1 oder einem der folgenden mit einem motorischen Antrieb für das Trennelement über mindestens eine Kolbenstange, dadurch gekennzeichnet, daß die Kolbenstange zentrisch an der Rückseite (26) des Trennelementes (24) angreift und das der abwechselnd beidseitig mit Druckmitteldruck beaufschlagbare Druckmittelzylinder an der Außenseite der hier befindlichen Stirnwandung des Gehäuses (5) koaxial angeflanscht ist.


**Claims**

1. Device for preferably continuous conveyance of powdered to coarse-grained materials, in particular filling materials in underground mining, with at least one storage container for the material to be conveyed, from which the material can be fed for example by gravity to at least one tubular housing or several tubular housings located underneath the storage container, which is/are connected to the storage container or storage containers by closable openings, whereby connected to the housing in question is/are one or more conveyor pipes, into which the material can be conveyed from the housing, with a coupling element movable along the housing concerned and a separating element mounted on it, which about its circumference has a radial slit preferably of the same size facing the inner wall of the housing, whereby the slit is connected on one side to a compressed gas supply chamber and on the other side to the delivery chamber upstream of the separating element in direction of conveyance, to which at least one conveyor pipe is connected, into which flows the conveyed material/compressed gas mixture, characterized by the fact that the axial length (A) of the circumferential overflow slot 30 is approximately equal to or greater than the discharge opening (D) of the socket in question for passing material to be conveyed into housing 5.

2. Device in accordance with Claim 1, characterized by the fact that the radial gap height about the circumference of the circular separating element 24 is the same.

3. Device in accordance with Claim 1 or 2, characterized by the fact that separating element 24 is located by at least one locating lug on its underside on the interior wall 31 of housing 5.

4. Device in accordance with Claim 1 or one of the subsequent claims, with motor drive for the separating element by means of at least one piston rod, characterized by the fact that the piston rod 33 acts centrally on the back 26 of separating element 24, and the pressure medium cylinder subjected alternately on each side to pressure medium pressure is coaxially flange-mounted onto the outside of the end wall of housing 5 located here.

**Revendications**

1. Dispositif pour le transport de préférence en continu de produits pulvérulents à grossiers, en particulier des remblais utilisables au fond des mines, avec au moins un réservoir de stockage du produit à transporter à partir duquel ledit produit peut être véhiculé, par exemple, par son poids propre, vers un ou plusieurs contenants tubulaires qui se trouvent sous le réservoir, qui est ou qui sont reliés par des ouvertures fermables au réservoir ou aux réservoirs, une conduite ou plusieurs conduites de transport étant raccordé(es) au réservoir en question, dans laquelle ou dans lesquelles le produit en provenance du contenant est transportable à travers un accouplement mobile et un élément de séparation adjacent, qui possède à sa périphérie une fente radiale de préférence de même dimension vers la paroi interne du contenant, ladite fente étant raccordée d'un côté à une chambre d'amenée de gaz sous pression et de l'autre côté à la chambre de transfert se trouvant en amont de l'élément de séparation vu dans le sens du transfert, à laquelle est branchée au moins une conduite de transfert dans laquelle s'engouffre le mélange produit à véhiculer — gaz sous pression, caractérisé par le fait que la longueur axiale (A) de la fente de transfert périphérique (30) est à peu près égale ou supérieure à l'ouverture (D) de chaque tubulure pour l'amenée de produit dans le contenant (5). .

2. Dispositif selon revendication 1, caractérisé par le fait que la hauteur radiale de la fente reste la même sur toute la périphérie de l'élément de séparation circulaire (24).

3. Dispositif selon revendication 1 ou 2, caractérisé par le fait que l'élément de séparation (24) est guidé au moins par un bec de guidage à sa partie inférieure sur la paroi interne (31) du contenant (5).

4. Dispositif selon revendication 1 ou l'une des suivantes muni d'une commande motorique de l'élément de séparation par l'intermédiaire d'au moins une bielle, caractérisée par le fait que la bielle (30) attaque au centre, à la paroi arrière (26) de l'élément de séparation (24), et que le vérin rempli d'un agent de compression exerçant son effet successivement de part et d'autre est bridé de façon coaxiale sur la face extérieure de la paroi frontale du contenant (5), qui se trouve à cet endroit.

Fig. 1

Fig. 2

0 117 922